# EUROPEAN PATENT SPECIFICATION

(11) **EP 1 432 215 B1**
(45) Date of publication and mention of the grant of the patent: **26.10.2005**
(21) Application number: 02028485.7
(22) Date of filing: 19.12.2002
(51) Int. Cl.: H04M 1/02

(54) **Cover for a portable electronic device**
Abdeckung für ein tragbares elektronisches Gerät
Couvercle pour un téléphone portable

(43) Date of publication of application: 23.06.2004
(73) Proprietor: Sony Ericsson Mobile Communications AB, 221 88 Lund (SE)
(72) Inventor: Carlsson, Marcus, 118 61 Stockholm (SE)
(74) Representative: Dahnér, Christer

(56) References cited:
- EP-A- 1 054 551
- GB-A- 2 363 541
- US-B1- 6 215 993

## Description

### TECHNICAL FIELD OF THE INVENTION

The present invention relates to the field of portable electronic devices and more particularly to the provision of a cover for a portable electronic device.

### DESCRIPTION OF RELATED ART

It Is within the field of portable electronic devices well known to provide such devices with protective covers in order to protect keys in a keypad in the device from being accidentally depressed and for protecting these keys from damage in case of accidental dropping of the device. Known solutions are flips, which is a form of cover being rotatably connected to the bottom of such a device, and slides, which cover and uncover the device by a sliding motion.

These devices also often have a display and a system connector through which the device can be charged or through which different accessories can be connected to the device. In the above-mentioned covers, the display and system connector are not covered. For the display this can lead to the display being scratched or breaking if the device is accidentally dropped. An unprotected system connector can be filled with dirt, which leads to degraded electrical contact and a consequent worse performance.

US 6,282,436 describes a cellular phone having a sliding cover, where the cover has three positions, a first position where it covers a whole keypad, a second position where parts of the keypad including control keys are uncovered, while the rest of the keys in the keypad are covered, and a third position where the whole keypad is uncovered. In the first position the keypad is protected from accidental depressions. However, the display and system connector of this device are never covered, why the above-mentioned problems associated with the display and the system connector are not solved.

Another cover is described in US 6,397,078. Here a cover, which includes a keypad, is provided over a display provided in a main portion of a cellular phone. The display is a touch screen. The cover is hingedly connected to an end of the main portion. By rotating the cover round said hinge, the whole display can be uncovered for touch input thereon. The keypad in the cover is also slideable between two positions, where it covers the whole display in a first position and only covers part of the display in a second position. Here the display is protected from damage when the keypad is in the first position and the cover is not rotated for uncovering the display. However, by providing the keypad on the exterior side of the cover, accidental key depressions are possible and these keys are also damage prone if the device is accidentally dropped. The document does not mention any system connector or any other electrical connecting unit for contact with for example a charger. The cover of this phone would not be able to cover such a connector if it was included. Thus the phone in this document does not avoid the problems of dirt in a connector either.

EP 1 054 551 describes a cover for a keypad and display in a mobile phone. The cover is provided as a tambour made to go round and cover keypad and display through the use of guide wheels. This tambour covers and protects the keypad and display.

GB 2 363 541 discloses a cover which according to some embodiments Is rotatably connected to the body of a phone via hinges for being provided in a closed and an open state. The document also describes a sliding speaker lid sliding in tracks provided on the sides of the phone.

US 6 215 993 describes a cover that is connected to the body of a phone via a hinge. As an alternative to this hinged cover a sliding cover is mentioned. The cover can be provided in a dosed, a partially open and a fully open position.

There is thus a need for an alternative cover to a portable electronic device which allows avoiding of accidental input via a keypad and protects the keypad from damage, stops dirt from entering electrical connectors and protects the display from scratching and accidental breaking if the device is accidentally dropped.

### SUMMARY OF THE INVENTION

The present invention is therefore directed towards solving the problem of providing an alternative slidable cover portion to a portable electronic device that protects a keypad as well as visual and electrical Interface units and provides at least one partly open position that reveals the visual interface and only a part of the keypad in addition to a fully open and a fully dosed position. The cover portion furthermore avoids accidental input via and protection of the keypad when not needed for use, stopping dirt from entering the electrical interface unit and protecting the visual interface unit from scratching and accidental breaking if a device comprising these units is accidentally dropped.

One object of the present invention is thus directed towards providing an alternative portable electronic device, which indudes a slidable cover portion that protects a keypad as well as visual and electrical interface units and provides at least one partly open position that reveals only a part of the keypad in addition to a fully open and a fully dosed position. The portable communication device furthermore allows avoiding of accidental input via and protection of the keypad when not in use, stops dirt from entering the electrical interface unit and protects the visual interface unit from scratching and accidental breaking if the device is accidentally dropped.

According to a first aspect of the present invention, this object is achieved by a portable electronic device comprising:
a main body provided with tactile interface units comprising at least one keypad as well as electrical and visual interface units, and
a cover portion being arranged to slide between at least two different positions, wherein the cover portion in a fully closed position covers at least the keypad of the tactile interface units and all electrical and visual interface units and when moved to a fully open position allows access to all electrical, visual and tactile interface units
wherein the cover portion can be moved into a partly open position allowing access to the visual interface and only a part of the keypad.

A third aspect of the present invention includes the features of the second aspect, wherein the partly open position also allows access to the electrical and visual interface units.

A fourth aspect of the present invention includes the features of the second aspect, wherein the cover portion is connected to at least one sliding member for providing sliding motion, where a retracted position of the sliding member provides the fully closed position of the cover portion and an extended position of the sliding member provides at least one other position of the cover portion.

A fifth aspect of the present invention includes the features of the second aspect, wherein the sliding member is a rail, which slides into and out of the main body and is essentially within the main body in the retracted position and essentially outside the main body in the extended position.

A sixth aspect of the present invention includes the features of the second aspect, wherein the sliding member is a rail, which slides along a side of the main body and is essentially provided along and aligned with the side of the main body in the retracted position and essentially beyond the main body in the extended position.

A seventh aspect of the present invention includes the features of the second aspect, wherein the sliding member is a tray, which slides into and out of the main body and is essentially within the main body in the retracted position and essentially outside the main body in the extended position.

An eighth aspect of the present invention includes the features of the fourth aspect, further including a hinge joining the sliding member with the cover portion.

A ninth aspect of the present invention includes the features of the eighth aspect, wherein the cover portion is essentially parallel with the sliding member in a first position of the cover portion and is rotatable by a number of degrees in relation to the sliding member for reaching a second position of the cover portion.

A tenth aspect of the present invention includes the features of the ninth aspect, wherein the number of degrees are approximately 135 degrees.

An eleventh aspect of the present invention includes the features of the ninth aspect, wherein the cover portion is in the partly open position if the sliding member is in the extended position and the cover portion is in the first position and the cover portion is in the fully open position if the sliding member is in the extended position and the cover portion is in the second position.

A twelfth aspect of the present invention indudes the features of the first aspect, wherein the cover portion covers all tactile interface units in the fully closed position.

A thirteenth aspect of the present invention includes the features of the first aspect, wherein the visual interface unit is a display in the form of a touch screen and the keypad is provided as a part of said touch screen.

A fourteenth aspect of the present invention includes the features of the first aspect, wherein the device is a cellular phone.

The present invention has many advantages. The invention provides protection of visual, electric and tactile interface units in a closed position. Thereby scratches on visual interface units can be avoided. It also protects visual interface units if the device is accidentally dropped. Dirt is prevented from entering electrical interface units and also tactile interface units are protected from erroneous depressions and breaking. Still the device allows use of these units when this is needed. Because of the invention there is furthermore no need for a keys-lock function for tactile interface units, which function can take up memory space in the device, which space can be a limited resource. A keys-lock function can also be irritating for a user when it is active. The device also presents a more aesthetically pleasing appearance, since these protruding interface units are covered. A user of the device is furthermore not confused by a large number of different interface units unless he really needs them, in which case they are easily accessible.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
Fig. 1 schematically shows a top view of a portable electronic device according to a first embodiment of the invention including a main body and a cover portion, where the cover portion is in a fully closed position covering interface units, where covered interface units are indicated with dashed lines,
fig. 2 schematically shows a side view of the portable electronic device according to the invention including the main body and the cover portion, where the cover portion is in a fully closed position,
fig. 3 schematically shows a side view of the portable electronic device according to the first embodiment of invention, where the cover portion is in a partly open position,
fig. 4 schematically shows a side view of the portable electronic device according to the first embodiment of the invention, where the cover portion is in a fully open position,
fig. 5 schematically shows a top view of the portable electronic device according to the invention, where the cover portion is in a fully closed position and where covered interface units are indicated with dashed lines together with a sliding member of the cover portion provided inside the main body and a hinge structure in the cover portion,
fig. 6 schematically shows a side view of the sliding member provided inside the main body together with locking units for locking the sliding member into a retracted and extended position,
fig. 7 schematically shows a side view of the portable electronic device according to a second embodiment of invention, where the cover portion is in a partly open position, and
fig. 8 schematically shows a side view of the portable electronic device according to the second embodiment of the invention, where the cover portion is in a fully open position.

### DETAILED DESCRIPTION OF EMBODIMENTS

The present invention relates to a portable electronic device comprising a main body and a cover portion that can slide between at least a fully closed and another position. In the following the invention will be described in relation to a cellular phone. It should however be realised that this is just one type of device in which the invention can be implemented. It can just as well be provided in other types of portable electronic devices such as a lap top computer, a palm top computer, an electronic organizer, a smartphone, a communicator, a calculator or a gaming machine.

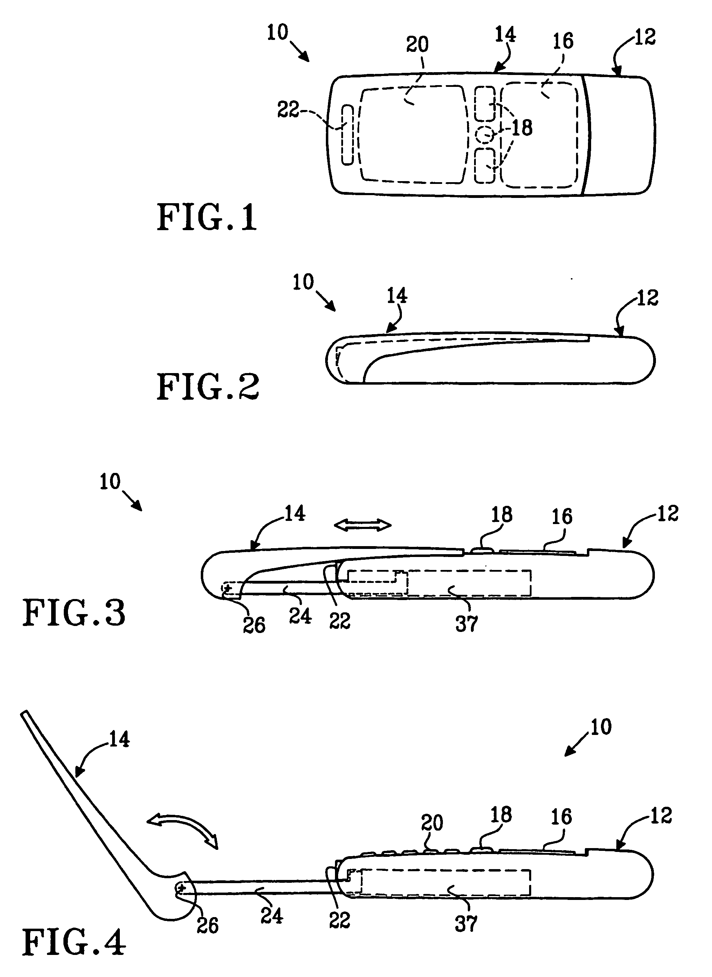

Fig. 1 schematically shows a top view of the phone 10 according to a first embodiment of the invention. The phone includes a main body 12 and a cover portion 14. The phone has a top and bottom end as well as a front and back side and two long sides interconnecting the top and bottom ends and the front and back sides. The cover portion 14 is here provided in a fully closed position covering all tactile, electrical and visual interface units of the phone provided directly under the top side, so that the phone is presented as a clean device without any protruding parts, which might disturb the aesthetic image of the phone. Covered parts are in the figure indicated by dashed lines. Tactile interface units are here provided in the form of a keypad, which Includes a first part 18 including navigation keys and a joystick and a second part 20 including the normal keys of a phone, i.e. buttons representing digits as well as "#"-, "*"- and "+"-keys. The second part of the keypad 20 can also comprise keys for inputting letters, either the same keys that are used for entering numbers or special letter keys. The phone also includes a visual interface unit in the form of a display 16 and an electrical interface unit in the form of a system connector 22 at the bottom end of the main body 12. The system connector 22 is provided for connection of a charger and possible other plug-in devices such as hands-free units, camera units and a chatboard. Because the interface units are covered when the covering portion is in this position, dirt is prevented from entering the system connector, the display is prevented from being scratched and the keypad is prevented from making unwanted entries, which could take place if the device is kept in a pocket. Because of this the phone does furthermore not have to include a keys-lock function for avoiding erroneous input of data. This saves space in the memory of the phone, which can be better used for other applications than the keys-lock function. The keys-lock function can also be disturbing for a user if it is activated and he wishes to make a phone call. All these units are furthermore protected from damage if the phone is accidentally dropped. Access to speakers and microphone is however possible also when the cover portion is fully closed.

Fig. 2 shows a side view of the phone with the main body 12 covered by the cover portion 14 in the fully closed position. The cover portion 14 is here designed so that the phone presents a symmetrical and clean object. It also covers all the bottom end of the main body in order to protect the system connector.

Fig. 3 shows a side view of the phone where the cover portion 14 has been slid into an extended position for providing a partly open position. Because of this the display 16 and the first part 18 of the keypad are accessible for use since the cover portion 14 no longer cover these. The second part 20 of the keypad is still protected, which prevents erroneous entering of data via the keys provided there. This position is furthermore provided such that the user is only presented with the interface units necessary. In many instances the navigation keys, the joystick and the display are the only interface units needed by a user. Also the system connector is accessible so that a charger or some other type of plug-in device can be connected to the phone. The cover portion 14 is also connected to a pair of sliding members 24, although only one sliding member is shown in the figure. The sliding members 24 are in this embodiment provided as a pair or rails on both sides of the system connector 22 and arranged to slide into the main body or frame 12 of the phone at the bottom end thereof. When the rails 24 are almost fully inserted in the main body 12, they are in a retracted position and when pulled out of the main body 12, they are in an extended position. The cover portion 14 is joined to the sliding members by a hinge 26 indicated in the figure by a cross. The cover portion 14 can be rotated round an axis defined by the hinge 26. In fig. 3 a first position of the cover portion 14 is shown, so that it is essentially parallel with the sliding members 24.

Fig. 4 shows yet another side view of the phone with the sliding member 24 in the extended position. Now the cover portion 14 has been rotated around the axis defined by the hinge 26 to a second position for providing a fully open position of the cover portion. In this position also the second part 20 of the keypad is accessible in addition to the system connector 22, the first part 18 of the keypad and the display 16. The cover portion 14 has been rotated by an angle in relation to the sliding members. This angle is according to the first embodiment approximately 135 degrees, which is a suitable angle for using the phone when talking.

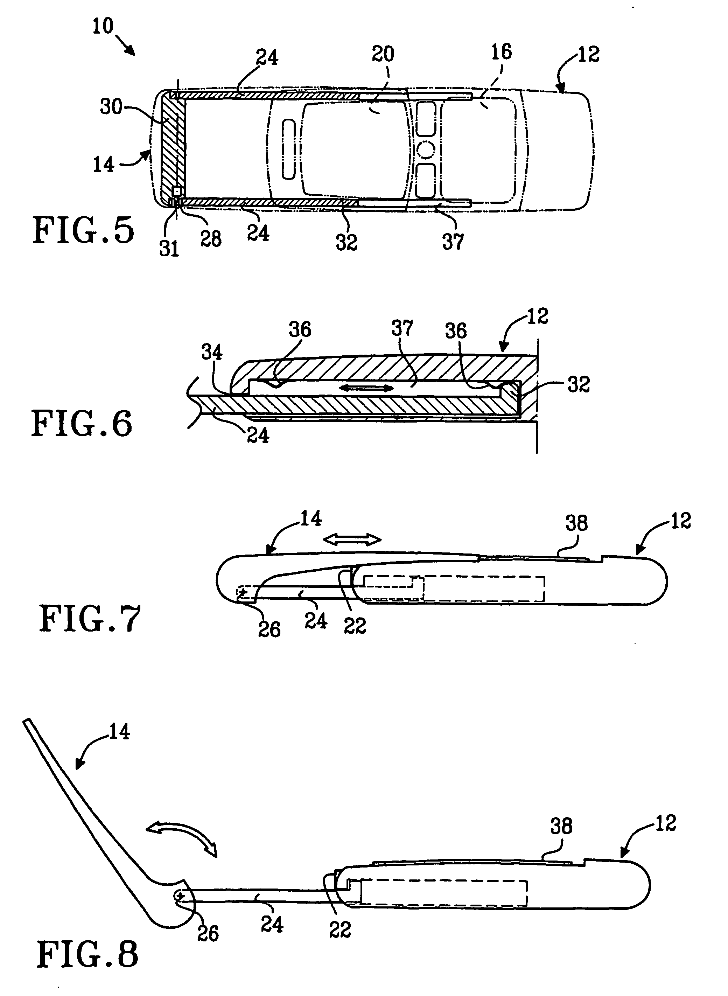

Fig. 5 shows a top view of the sliding and rotating structure of the phone for the partly open position. The main body and the cover portion are also outlined for better understanding the positional relationship between the different parts of the sliding and rotating structure. Also the system connector 22, the display 16 and the keypad 20 and 18 are shown. The two sliding rails 24 are provided along both the long sides of the main body and include a protrusion 32 at the top end furthest from the bottom end of the main body. As stated earlier the rails 24 are provided on both sides of the system connector 22 and are arranged for sliding out from the bottom end of the main body. At the side furthest from the protrusions, which in the fully closed position is near the bottom end of the main body, the rails 24 are provided with holes. A rail connecting body 30 is provided between the two rails and includes taps 31 at both ends. Each tap 31 goes through the hole in a rail 24 and contacts a corresponding recess 28 provided in the cover portion, although only one such tap and recess is shown in the figure. With this construction the cover portion can be rotated round an axis defined by the rail connecting body 30 and the taps 31. The recesses 28 can be provided with flexible snapping mechanisms for releasably locking the cover portion in the first and second positions, although this is not shown.

In order to describe the sliding process, reference is now made to fig. 6 showing a side view of the sliding rail 24 inside the main body 12 or frame. The main body 12 includes a cavity 37 dimensioned for allowing sliding motion of the rail 24 including the protrusion 32. The cavity stretches from the bottom end of the main body where it has an opening 34 through which only the rail 24 can slide towards the top end of the main body. The opening 34 does however block the protrusion 32, such that the rail 24 cannot be pulled out of the cavity 37. In order to snap the rail into a retracted portion, where it is essentially within the cavity 37, and in an extended position, where it is essentially outside the cavity 37, the wall of the cavity is provided with a pair of locking units in the form of springs 36 releasably holding the protrusion 32 against an end wall of the cavity furthest from the bottom end. When the rail 24 is pulled from the retracted position where the protrusion 32 is placed against the end wall of the cavity 37, the spring 36 is forced upwards such that the rail can be moved. Once the protrusion 32 has passed the spring 36, it flexes back. When the rail then reaches a front wall of the cavity 37 in which the opening 34 is provided, the spring 36 provided in proximity to this wall is forced upwards to allow passage of the protrusion 32 and flexes back to it's original position once the protrusion has passed the spring, thus holding the protrusion 32 against the front wall and ensuring the extended position. When the rail is slid back the opposite manoeuvre is performed. The springs can be metallic or plastic parts of the frame.

Fig. 7 and 8 show side views of an alternative phone according to a second embodiment of the invention. These figures are similar to fig. 3 and 4. The difference between fig. 7 and 8 and 3 and 4 is that instead of providing a separate keypad and display, the device in fig. 7 and 8 includes a touch screen 38 which provides the keypad. One part of the screen is then acting as a visible interface unit, while another part is acting as a tactile interface unit, i.e. as a keypad, possibly combined with acting as a visible interface unit. In all other respects this device is similar to the one already described.

The present invention can be varied in many ways. The rails do not have to be provided in the interior of the main body. Instead they can be provided on the outside of the main body running in grooves provided at the sides of the main body. Then a rail is essentially provided along and aligned with a side of the main body in the retracted position and essentially beyond the main body in the extended position. Another variation is that the sliding member does not have to be provided as a pair of rails at all. It can also be shaped as a tray running into the interior of the main body. This tray can in one alternative variation be running along the bottom end of the phone. These are just a few of the many ways in which the sliding motion can be provided.

Another variation that can be made is that the sliding member does not have to be slid into the extended position in order for the cover portion to rotate from the first to the second position. This means that the cover portion can be rotated into the second position when the sliding member is in the retracted position. When this is done the cover portion goes from the fully closed position into a position where the whole keypad and the display are accessible directly, without the cover portion being in the partly open position. The system connector can in this case also be accessible or covered depending on if protection from dirt is required or not. The keypad does also not have to be one keypad. Instead there can be one keypad for numbers/letters and one keypad for navigation.

It should be realised that the electrical interface unit does not have to be a system connector, but can be limited to a connector for a charger in case a short length high frequency wireless communication like Bluetooth™ is used.

It might be possible to use the phone in the fully closed position, even though no tactile, electrical or visual interface units are accessible. If the phone is provided with voice recognition, it can be programmed when in the partly open or the fully open position, to make and answer phone calls by voice commands from a user. This means that the tactile, electrical and visual interface units can be protected even though the phone is used and that the appearance of the phone can be more appealing to a user also during use. The user does in this case also not have to deal with several different interface units for making a call, where the mere number of these interface units in certain situations can confuse the user regarding which interface unit to use and how to use it. This can often be the case if the user is not well accustomed to modern technology.

Another possible variation is that the sliding member can be provided with an intermediate position between the extended and retracted positions. This can be used if the hinge is not provided between the cover portion and sliding members, i.e. when the cover portion only has the first position in relation to sliding members. Then the intermediate position of a sliding member would provide the partly open position and the extended position would provide the fully open position. This intermediate position can for example be obtained by using a pair of springs to be provided on each side of the protrusion. The springs would then be working in the previously described way.

The present invention therefore provides a portable electronic device, which provides an enhanced protection of included interface units and that provides the possibility to provide a more aesthetical design by hiding disturbing details, by hiding these details the risk of a user getting confused by the mere number of them is furthermore reduced.

As also mentioned previously, the invention can be varied in many ways. Therefore the invention is only to be limited by the accompanying claims.

## Claims

1. Portable electronic device (10) comprising:
a main body (12) provided with tactile interface units (20, 18; 38) comprising at least one keypad (18, 20) as well as electrical (22) and visual (16; 38) interface units, and
a cover portion (14) being arranged to slide between at least two different positions,
wherein the cover portion in a fully dosed position covers at least the keypad (18, 20) of the tactile interface units and all electrical (22) and visual (16) interface units, In a partly open position allows access to the visual interface and only a part of the keypad and in a fully open position allows access to all electrical, visual and tactile interface units,
**characterised in that** the cover portion (14) is connected, via a hinge (26), to at least one sliding member (24) for providing sliding motion, where a retracted position of the sliding member provides the fully closed position of the cover portion and an extended positions of the sliding member provides the partly and the fully open positions.

2. Portable electronic device according to claim 1, wherein the partly open position also allows access to the electrical and visual interface units.

3. Portable electronic device according to claim 1 or 2, wherein the sliding member is a rail (24), which slides into and out of the main body (12) and is essentially within the main body in the retracted position and essentially outside the main body in the extended position.

4. Portable electronic device according to claim 1 or 2, wherein the sliding member is a rail, which slides along the side of the main body and is essentially provided along and aligned with a side of the main body in the retracted position and essentially beyond the main body in the extended position.

5. Portable electronic device according to claim 1 or 2, wherein the sliding member is a tray, which slides into and out of the main body and is essentially within the main body in the retracted position and essentially outside the main body in the extended position.

6. Portable electronic device according to any previous claim, wherein the cover portion is essentially parallel with the sliding member in a first position of the cover portion and is rotatable by a number of degrees in relation to the sliding member for reaching a second position of the cover portion.

7. Portable electronic device according to claim 6, wherein the number of degrees are approximately 135 degrees.

8. Portable electronic device according to claim 6 or 7, wherein the cover portion is in the partly open position if the sliding member is in the extended position and the cover portion is in the first position and the cover portion is in the fully open position if the sliding member is in the extended position and the cover portion is in the second position.

9. Portable electronic device according to any previous claim, wherein the cover portion covers all tactile interface units in the fully closed position.

10. Portable electronic device according to any previous claim, wherein the visual interface unit is a display in the form of a touch screen (38) and the keypad is provided as a part of said touch screen.

11. Portable electronic device according to any previous claim, wherein the device is a cellular phone.

## Patentansprüche

1. Tragbare elektronische Vorrichtung (10) umfassend:
einen Hauptkörper (12) versehen mit taktilen Schnittstelleneinheiten (20, 18; 38) umfassend wenigstens ein Tastenfeld (18, 20) sowie elektrische (22) und visuelle (16; 38) Schnittstelleneinheiten, und
ein Abdeckteil (14), das so angeordnet ist, um zwischen wenigstens zwei unterschiedlichen Positionen zu gleiten,
wobei das Abdeckteil in einer völlig geschlossenen Position wenigstens das Tastenfeld (18, 20) der taktilen Schnittstelleneinheiten und alle elektrischen (22) und visuellen (16) Schnittstelleneinheiten bedeckt, in einer teilweise geöffneten Position den Zugang zur visuellen Schnittstelle und nur zu einem Teil des Tastenfeldes ermöglicht, und in einer völlig geöffneten Position den Zugang zu allen elektrischen, visuellen und taktilen Schnittstelleneinheiten ermöglicht,
**dadurch gekennzeichnet, dass** das Abdeckteil (14) über ein Scharnier (26) mit wenigstens einem gleitenden Teil (24) verbunden ist, um eine Gleitbewegung zu ermöglichen, wobei eine eingefahrene Position des gleitenden Teiles die völlig geschlossene Position des Abdeckteils ermöglicht und eine ausgefahrene Position des gleitenden Teiles die teilweise und die völlig geöffneten Positionen ermöglicht.

2. Tragbare elektronische Vorrichtung nach Anspruch 1, wobei die teilweise geöffnete Position auch den Zugang zu den elektrischen und visuellen Schnittstelleneinheiten ermöglicht.

3. Tragbare elektronische Vorrichtung nach Anspruch 1 oder 2, wobei das gleitende Teil eine Schiene (24) ist, die in den und aus dem Hauptkörper (12) gleitet und sich im Wesentlichen innerhalb des Hauptkörpers in der eingefahrenen Position und im Wesentlichen außerhalb des Hauptkörpers in der ausgefahrenen Position befindet.

4. Tragbare elektronische Vorrichtung nach Anspruch 1 oder 2, wobei das gleitende Teil eine Schiene ist, die entlang der Seite des Hauptkörpers gleitet und die im Wesentlichen entlang und ausgerichtet mit einer Seite des Hauptkörpers in der eingefahrenen Position und im Wesentlichen jenseits des Hauptkörpers in der ausgefahrenen Position vorgesehen ist.

5. Tragbare elektronische Vorrichtung nach Anspruch 1 oder 2, wobei das gleitende Teil eine Schale ist, die in das und aus dem Hauptkörper gleitet und sich im Wesentlichen innerhalb des Hauptkörpers in der eingefahrenen Position und im Wesentlichen außerhalb des Hauptkörpers in der ausgefahrenen Position befindet.

6. Tragbare elektronische Vorrichtung nach einem der vorhergehenden Ansprüche, wobei das Abdeckteil im Wesentlichen parallel ist mit dem gleitenden Teil in einer ersten Position des Abdeckteiles und mit einer Anzahl von Graden in Bezug zum gleitenden Teil drehbar ist, um eine zweite Position des Abdeckteiles zu erreichen.

7. Tragbare elektronische Vorrichtung nach Anspruch 6, wobei die Gradanzahl ungefähr 135 Grad beträgt.

8. Tragbare elektronische Vorrichtung nach Anspruch 6 oder 7, wobei sich das Abdeckteil in der teilweise geöffneten Position befindet, wenn das gleitende Teil in der ausgefahrenen Position ist und das Abdeckteil in der ersten Position ist und das Abdeckteil sich in der völlig geöffneten Position befindet, wenn das gleitende Teil in der ausgefahrenen Position ist und das Abdeckteil ist in der zweiten Position ist.

9. Tragbare elektronische Vorrichtung nach einem der vorhergehenden Ansprüche, wobei das Abdeckteil alle taktile Schnittstelleneinheiten in der völlig geschlossenen Position bedeckt.

10. Tragbare elektronische Vorrichtung nach einem der vorhergehenden Ansprüche, wobei die visuelle Schnittstelleneinheit in der Form eines Berührungsbildschirmes (38) ausgebildet ist und das Tastenfeld als ein Teil des Berührungsbildschirmes vorgesehen ist.

11. Tragbare elektronische Vorrichtung nach einem der vorhergehenden Ansprüche, wobei die Vorrichtung ein Zellular-Telefon ist.

## Revendications

1. Dispositif électronique portatif (10), comprenant :
un corps principal (12) pourvu de modules d'interfaces tactiles (20, 18 ; 38) comprenant au moins un clavier numérique (18, 20) de même que des modules d'interfaces électrique (22) et visuelle (16 ; 38), et
une partie (14) de couvercle étant agencée pour coulisser entre au moins deux positions différentes,
dans lequel la partie de couvercle, dans une position complètement fermée, couvre au moins le clavier numérique (18, 20) des modules d'interfaces tactiles et des modules d'interfaces électrique (22) et visuelle (16), dans une position partiellement ouverte, permet un accès à l'interface visuelle et à seulement une partie du clavier numérique et, dans une position complètement ouverte, permet un accès à tous les modules d'interfaces électrique, visuelle et tactiles,
**caractérisé en ce que** la partie (14) de couvercle est reliée, via une charnière (26), à au moins un élément coulissant (24) permettant un mouvement coulissant, où une position rétractée de l'élément coulissant fournit la position complètement fermée de la partie de couvercle et où une position déployée de l'élément coulissant fournit les positions partiellement et complètement ouvertes.

2. Dispositif électronique portatif selon la revendication 1, dans lequel la position partiellement ouverte permet également un accès aux modules d'interfaces électrique et visuelle.

3. Dispositif électronique portatif selon la revendication 1 ou 2, dans lequel l'élément coulissant est un rail (24), qui coulisse dans le et hors du corps principal (12) et se trouve essentiellement à l'intérieur du corps principal dans la position rétractée et essentiellement à l'extérieur du corps principal dans la position déployée.

4. Dispositif électronique portatif selon la revendication 1 ou 2, dans lequel l'élément coulissant est un rail, qui coulisse le long du côté du corps principal et est, dans la position rétractée, disposé essentiellement le long d'un côté du corps principal, et aligné avec celui-ci, et, dans la position déployée, disposé essentiellement au-delà du corps principal.

5. Dispositif électronique portatif selon la revendication 1 ou 2, dans lequel l'élément coulissant est un plateau, qui coulisse dans le et hors du corps principal et se trouve, dans la position rétractée, essentiellement à l'intérieur du corps principal et, dans la position déployée, essentiellement à l'extérieur du corps principal.

6. Dispositif électronique portatif selon l'une quelconque des revendications précédentes, dans lequel, dans une première position de la partie de couvercle, la partie de couvercle est essentiellement parallèle à l'élément coulissant et peut tourner d'un certain nombre de degrés par rapport à l'élément coulissant pour atteindre une seconde position de la partie de couvercle.

7. Dispositif électronique portatif selon la revendication 6, dans lequel le nombre de degrés est d'environ 135 degrés.

8. Dispositif électronique portatif selon la revendication 6 ou 7, dans lequel la partie de couvercle est dans la position partiellement ouverte si l'élément coulissant se trouve dans la position déployée et si la partie de couvercle est dans la première position, et dans lequel la partie de couvercle est dans la position complètement ouverte si l'élément coulissant se trouve dans la position déployée et si la partie de couvercle est dans la seconde position.

9. Dispositif électronique portatif selon l'une quelconque des revendications précédentes, dans lequel, dans la position complètement fermée, la partie de couvercle couvre tous les modules d'interfaces tactiles.

10. Dispositif électronique portatif selon l'une quelconque des revendications précédentes, dans lequel le module d'interface visuelle est un afficheur sous la forme d'un écran tactile (38), et le clavier numérique est réalisé en tant que partie dudit écran tactile.

11. Dispositif électronique portatif selon l'une quelconque des revendications précédentes, dans lequel le dispositif est un téléphone cellulaire.
